# EUROPEAN PATENT SPECIFICATION

(11) **EP 3 407 563 B1**
(45) Date of publication and mention of the grant of the patent: **23.09.2020**
(21) Application number: 18169678.2
(22) Date of filing: 26.04.2018
(51) Int. Cl.: H04L 29/06

(54) **METHOD, APPARATUS AND MACHINE READABLE MEDIUM FOR ACCELERATING NETWORK SECURITY MONITORING**
VERFAHREN, VORRICHTUNG UND MASCHINENLESBARES MEDIUM ZUR BESCHLEUNIGUNG DER ÜBERWACHUNG DER NETZWERKSICHERHEIT
MÉTHODE, APPAREIL ET SUPPORT LISIBLE PAR MACHINE ACCÉLÉRATION DE LA SURVEILLANCE DE SÉCURITÉ DE RÉSEAU

(30) Priority: 26.05.2017 US 201715607121
(43) Date of publication of application: 28.11.2018
(73) Proprietor: INTEL Corporation, Santa Clara, CA 95054 (US)
(72) Inventor: SOOD, Kapil, Portland, OR Oregon 97229 (US); HERDRICH, Andrew J., Hillsboro, OR Oregon 97123 (US); DUBAL, Scott P., Beaverton, OR Oregon 97007 (US); CONNOR, Patrick L., Beaverton, OR Oregon 97007 (US); HEARN, James Robert, Hillsboro, OR Oregon 97124 (US); MCDONNELL, Niall D., Limerick, V94 TK5W (IE)
(74) Representative: Rummler, Felix

(56) References cited:
- US-A- 5 634 015
- US-A1- 2005 157 719
- US-A1- 2016 087 809

## Description

### TECHNICAL FIELD

Embodiments generally relate to monitoring a network, such as for security. One or more embodiments regard network security monitoring in a telecommunications (e.g., Third Generation Partnership Project (3GPP), Long Term Evolution (LTE), or the like), or other network.

### TECHNICAL BACKGROUND

Some current widely used mechanisms for traffic monitoring/telemetry include using established protocols like sampled flow (sFlow), from the sFlow.org consortium, Netflow, from Cisco Systems®, Inc. of San Jose California, United States, or the like for collecting telemetry and delivering the collected telemetry to an analysis system. The analysis system can perform network security analytics on the telemetry. Traffic data is typically collected by physical switches using port mirroring, basic filtering/statistics aggregation using dedicated hardware engines within the physical switches/routers, or through special-purpose traffic duplication hardware.

At present, the inventors are not aware of a known solution for providing line-rate, secure network security monitoring capability on a general purpose communication platform, at high packet processing rates, and without visible effects to the workloads in question.

US5634015A relates to a generic adapter. Data is carried by data stream packets of variable lengths, and each packet includes a header control information portion required by communication protocols used to mediate the information exchange, and normally a data portion for the data which is to be communicated. A packet memory stores data packets arriving at a plurality of generic adapter input/output ports. The packet memory is segmented into a plurality of buffers, and each data packet is stored in one or more buffers as required by the length thereof. A generic adapter manager is provided for performing and synchronizing generic adapter management functions, including implementing data structures in the packet memory by organizing data packets in buffers, and organizing data packets into queues for processing by the processor subsystem or transfer to or from generic adapter input/output ports. The generic adapter manager prepares future response to anticipated requests for communications services which are functions of the current requests for communication services, such as preparing a response for an anticipated request for a next buffer by a current request for a receipt of data. The generic adapter manager stores the future responses at specified addresses in memory which can be read by a requester. Each generic adapter input/output port has associated therewith a packet memory interface providing for the transfer of data packets into and out of the packet memory, such that when a data packet is received at an input/output port, the data packet is transferred into the adapter packet memory and queued for processing.

US2005/157719A1 relates to multicasting of data. A data structure, referred to as a to-do list, is maintained with entries for enqueued data elements. To-do list entries include a data element pointer identifying the corresponding data element and a leaf to be processed pointer indicating the progression of transmission of the corresponding data element to the plurality of leaves of a multicast tree, wherein the plurality of leaves are used to transmit the data to a plurality of multicast destinations.

US2016/087809A1 relates to a multicast rule represented in a hierarchical linked list with N tiers. Each tier or level in the hierarchical linked list corresponds to a network layer of a network stack that requires replication. Redundant groups in each tier are eliminated such that the groups in each tier are stored exactly once in a replication table.

### STATEMENTS OF INVENTION

In accordance with the present invention, there is provided a hardware queue manager as set out in claim 1 and a method for network security monitoring as set out in claim 8. Other aspects of the invention can be found in the dependent claims.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 illustrates, by way of example, a diagram of an embodiment of a system along with connection lines for security monitoring using only software mechanisms.
FIG. 2 illustrates, by way of example, a diagram of an embodiment of a system that includes hardware acceleration.
FIG. 3 illustrates, by way of example, a schematic of an embodiment of a system for hardware acceleration.
FIG. 4 illustrates, by way of example, an exploded view of a smaller system that forms a portion of the larger system shown in FIG. 3.
FIG. 5 illustrates, by way of example, a schematic diagram of an embodiment of a system.
FIG. 6 illustrates, by way of example, a schematic diagram of an embodiment of a system.
FIG. 7 illustrates, by way of example, a diagram of an embodiment of a method for hardware accelerating network security monitoring (NSM).
FIG. 8 illustrates, by way of example, a block diagram of an embodiment of a system.

### DESCRIPTION OF EMBODIMENTS

Discussed herein, are systems and methods directed to accelerating NSM. One or more embodiments include hardware solutions to improve such acceleration, such as a hardware queue manager (HQM). Embodiments can help deliver platform capabilities (communication platform core, component blocks, CSME/ME/IE), enhancements for securely deploying NSM, and advanced non-intrusive debug capabilities within scalable operator networks.

Communication platforms can be optimized for single stream processing from network interface controllers (NICs)/switches. However, operational security mechanisms like Network Security Monitoring (NSM), secure delivery of telemetry out of platform, maintaining SLA sensitivity while performing network monitoring, and the like, are all tasks that can help Network Function Virtualization (NFV), LTE, 3GPP, Virtual Evolved Packet Core (vEPC), and/or Virtual Customer Premises Equipment (vCPE) network visibility. Thus, solving these problems can help reduce workloads on the platform.

Embodiments discussed herein can help address this workload and visibility gap by providing a general mechanism that can address one or more of these gaps. One or more embodiments can securely bind platform trusted elements like Converged Security and Manageability Engine (CSME), Management Engine (ME), IE, and Software Guard Extensions (SGX), and electrical or electronic components (e.g., HQM, cache controller, crypto processor, or the like)/Field Programmable Gate Array (FPGA) based security and compression processing.

As switching functions extend into the servers between Virtual Machines (VMs), such as using Open vSwitch (OvS®), from Apache® Software Foundation of Forest Hill, Maryland, United States, or router software, performing the same actions in software is highly inefficient and results in platform packet processing degradation. This degradation may be noticeable to tenants (e.g., infrastructure as a service (IaaS) tenants) or service consumers, for example. Performing port mirroring, using switched port analyzer (SPAN), and/or Terminal Access Point (TAP), and then using NSM traffic protection (e.g., encryption, source authentication, etc.) using current communication platform software-only mechanisms consumes many compute cycles across many cores and increases core-to-core communication. This is not sustainable given the increasing rate of packet processing on modern servers, exceeding 100 Gigabits per second (Gbps) and projected to reach 400 Gbps by 2020.

Without hardware acceleration, the current performance level of plaintext traffic ingress to traffic egress is disrupted, and performance degrades, which can affect the entire platform performance, limit scalability, and restrict tenant load capabilities (e.g., bandwidth) or lead to poor Service Level Agreement (SLA) delivery.

By offloading these capabilities in a carefully designed software framework and through modifications to the existing HQM, secure network monitoring and debug capabilities can be constructed with a minimum of communication platform software cycles spent, leveraging HQM offload and providing improved customer value, via improved system performance. In addition, communication platform security technologies, like SGX and CSME, can be used for securely provisioning the HQM traffic policies and memory areas for forking (e.g., "teeing") the duplicate traffic. SGX and VM-based memory encryption technologies can provide some measure of confidentiality, but do not protect a policy path and the policy processing from other VMs/Virtual Network Functions (VNFs), System Administrator, NFV Infrastructure Managers, or the like. NFV generally decouples software implementations of network functions from the hardware the network functions used to perform the operations of the software.

NSM can be a useful security-provider in existing 3GPP/LTE networks. NSM may include an ability to securely monitor network telemetry for security threats, such as malware encroachments, anomalies, and zero-day attacks, among others. As existing LTE/3GPP systems move to NFV, and Software Defined Systems (SDS), NSM can be provided while maintaining a same line rate and same functionality as in existing systems.

As a number of cores on a platform increases, it may be expected that all the telecommunications infrastructure like the vEPC or vCPE are running on the same platform. Thus, it can be useful to monitor the vEPC and vCPE networks on the platform. Currently this entire processing, on at least some platforms is not visible on the physical networks outside of the platform. Hence, adding components like NSM on platforms may help increase security. Stated another way, in environments where VNFs (VMs performing specific network functions) are chained into Service Function Chains (SFC), the ability to inspect and debug traffic between each stage can help improve security for full-scale deployments. One or more of these problems may be addressed by one or more embodiments.

To save compute (e.g., central processing unit (CPU)) cycles, it can help to accelerate operations in a general-purpose manner, such as to not take away cycles from higher-level compute jobs or packet processing workload. Using the techniques described in the following sections, embodiments can help achieve these goals.

Some requirements and problems that should be addressed for NFV/SDN systems, over and above existing physical network functions/systems, can be summarized as follows. These security and performance requirements are taken from the European Telecommunications Standards Institute (ETSI) NFV specifications (e.g., ETSINFV SEC013, SEC012, SEC001) that are being developed with the operators for NFV/SDN deployments on communications platforms:
1. NFV Workloads can migrate across platforms. This means that NSM capabilities can be replicated/migrated along with the workloads. Hence, NSM can consistently exist on every platform to which a workload could migrate.
2. NFV/SDN platforms support heterogeneous workloads (e.g., including vEPC, vCPE, video, web, tenant applications, etc.). Plus, NFV control and data planes are on entirely different platforms. Together, these conditions can degrade NSM performance, impacting SLA and traffic, and making it useful for NSM to be performed on all platforms in a deterministic manner, supporting SLAs with low jitter.
3. Security requirements for NSM (from ETSI NFV SEC013 normative specification) demands utilization of platform trust capabilities, such as to be able to securely deliver and implement the NSM policy.

Embodiments can function by collecting telemetry, such as from dynamic, virtual networks that overlay onto physical networks. One or more embodiments integrate policy engines from open virtual switches/routers into a communication platform. One or more embodiments may, additionally or alternatively, use packet forking (sometimes known as "teeing" in the art) capabilities in an HQM device to provide these functions. Such embodiments can help save CPU cycles and enable additional NSM capabilities, improving overall system processing speed. Traffic forking into multiple streams could include a division of the traffic after decryption, de-encapsulation, and processing, before re-encryption or compression, for example.

At present, the inventors are unaware of a known solution for providing line-rate, secure NSM capability on general purpose communication platforms at high packet processing rates, such as without visible effects to the workloads in question. The current communication platforms are optimized for single stream processing from NICs/switches. Operational security mechanisms like NSM, secure delivery of telemetry out of platform, maintaining SLA sensitivity, while performing NSM, are tasks will help secure NFV/LTE vEPC, vCPE, network visibility.

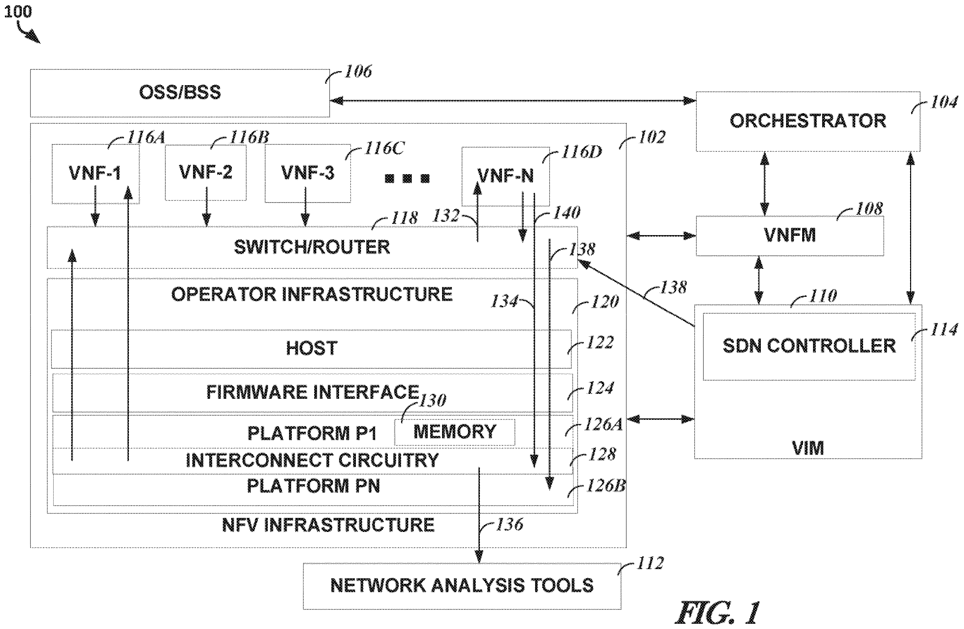

FIG. 1 illustrates, by way of example, a diagram of an embodiment of a system 100 along with system connections for security monitoring. In some embodiments, only software mechanisms are used. The system 100 does not necessarily use hardware acceleration for performing security monitoring. The system 100 as illustrated includes an NFV infrastructure 102, an orchestrator 104, an operations support system (OSS)/business support system (BSS) 106, a VNF monitor (VNFM) 108, a virtualized infrastructure manager (VIM) 110, and network analysis tools 112.

The NFV infrastructure 102 virtualizes network node functions that may be chained together to create, for example, communication services. The NFV infrastructure 102 as illustrated includes virtual network functions (VNFs) 116A, 116B, 116C, and 116D, a switch/router 118, and an operator infrastructure 120.

VNFs 116A-116D are virtualized tasks formerly carried out by dedicated hardware. The VNFs 116A-116D move these operations previously performed by the dedicated hardware to software instantiations. The VNFs 116A-116D operate by virtue of the hardware and/or software programming of the host 122.

The switch/router 118 provides communication capability between platforms 126A-126B and/or VNFs 116A-116D. A switch connects computers or other network devices. A router connects a first network to a second network, such as by connecting a network to the internet. The router generally manages a path of data (e.g., a request, message, or a response, among others) provided to another network.

The operator infrastructure 120 hosts other operator's VNFs and includes the host 122 (e.g., operating system (OS), cloud OS, and/or hypervisor), a firmware interface 124 (e.g., a unified extensible firmware interface (UEFI) or basic input/output system (BIOS)), a plurality of platforms 126A and 126B (for example), and interconnect circuitry 128 (e.g., input/output (I/O) ports, network interface controller (NIC), switch, host fabric interface (HFI), or the like).

The host 122 can include hardware or software for providing resources used by the VNFs 116A-116D for performing their operations. The host can include an OS, cloud OS, hypervisor, or the like on which the VNFs can operate.

The firmware interface 124 can include a UEFI, BIOS, or the like. The firmware interface 124 defines a software interface between the host 122 and the firmware (e.g., the VNF 116A-116D).

The platform 126A-126B provides communication functionality for devices connected to a communication network. Examples of functionality provided by the platform 126A-126B include voice lines and internet access, and operations for supporting the voice and internet access, among others. The platform 126A includes memory 130 (so does platform 126B, but the storage is not shown in order not to obscure the view of the system 100. The platforms 126A-126B may be communicatively coupled by interconnect circuitry 128.

The orchestrator 104 performs resource and/or network service orchestration. The orchestrator 104 binds functions provided by the VNFs 116A-116D, such as to create a service in an otherwise dispersed NFV environment. The orchestrator 104 can help ensure that adequate compute, storage, and/or other network resources are available to provide a network service. The orchestrator 104 can authorize, coordinate, release, and govern VNFs 116A-116D sharing resources of the infrastructure 102.

The OSS/BSS 106 are computer systems used by telecom service providers to manage their networks. The OSS/BSS 106 can support network inventory, configuration, fault management, and/or service provisioning.

The virtual network function manager (VNFM) 108 works with the orchestrator 104 and VIM 110 to provide VNF capability. The VNFM 108 may instantiate VNFs 116A-116D, scale VNFs 116A-116D, update and/or upgrade the VNFs 116A-116D, and/or terminate VNFs 116A-116D. The VNFM 108 can manage a single VNF or multiple VNFs. The VNFM 108 maintains the virtualized resources that support the VNF 116A-116D.

The VIM 110 as illustrated includes an SDN controller 114. The VIM 110 controls and manages compute, storage, and other network resources of the infrastructure 102. The VIM 110 can handle infrastructure in one or a plurality of infrastructures, such as can include the infrastructure 102. The VIM 110 can maintain a list of which virtual resources are allocated which physical resources, manage security group policies (for access control), manage a repository of NFV hardware resources and software resources, such as to help improve and optimize the use of system resources.

The SDN controller 114 is an application that manages flow control, such as within networks. The SDN controller 114 allows a server or other network resource to select a switched packet destination, indicating to a switch where to send a packet. The SDN controller 114 can take a control plane of network hardware and runs it as software. The SDN controller 114 can distribute monitoring policies.

The network analysis tools 112 can provide functionality for analyzing telemetry data, such as NSM functionality. The network analysis tools 112 can include vEPC, vCPE NFV analytics, data storage, network anomaly detection, and/or malware detection, or the like.

Network security monitoring (NSM) traffic is indicated by arrows 132, 134, 136, and 138. The flow of this NSM traffic may be "accelerated" by embodiments discussed herein. The SDN controller 114 of the VIM 110 may provide a policy to the VNF 116D (e.g., a security monitoring (SecMon) VNF), as indicated by a combination of arrows 138 and 132. Traffic provided to the VNF 116D may be securely terminated. The VNF 116D can monitor traffic (e.g., all traffic) on the switch/router 118 (as indicated by arrow 132). The VNF 116D can apply a provided monitoring policy to the traffic. The VNF 116D provides, based on the monitoring policy, monitored traffic to the interconnect circuitry 128 (as indicated by the arrow 134 or the arrows 140 and 138). The interconnect circuitry 128 provides the monitored traffic to network analysis tools 112, as indicated by arrow 136. The network analysis tools 112 may include security and networking analytics systems, meta data collectors, network profiling, per-tenant and/or per-flow monitoring systems, and/or onto tenant monitoring systems.

The NSM scheme of FIG. 1 results in significant overall platform degradation as valuable CPU cycles are consumed by the VNF 116D that is responsible for monitoring packets from the switch/router 118, reformatting the packets to fit telemetry protocols, and securely bundling the packets and deliver to external systems. Such NSM operations may consume twenty-five percent (or more) of available compute resources of the platform(s) 126A-B.

Other arrows (not labelled with a reference number in FIG. 1) can indicate data, signaling control traffic, traffic from a physical network to a virtual network on a platform, or between VNFs/VMS on the platform.

FIG. 1 provides an example of a virtual switch supporting VM-to-VM communication running on a platform. In the example of FIG. 1, the VMs are software entities that could potentially provide introspection capability via, for example, software-based copying of the packet. Consider, VNF 116A and VNF 116B are communicating, and communication between the two is to be debugged. For example, VNF 116A can be a packet gateway and VNF 116B can be a service gateway. A software copy of the packets between the VNFs 116A-B, but, software copying has a couple of problems, in that the switch/router 118 themselves are often slow in performing such a copy. Thus, such copying can reduce system 100 throughput. Another problem is that adding this debug capability can add additional burden to the system 100. In contrast, an HQM that has this capability can offload the copying from system 100 to be managed by a queue of the HQM, saving compute cycles and power. Further, introspection capability of the traditional virtual switch can be retained without having to resort to running all the copying and management in software. Using an HQM is a way to pull that functionality-specifically the traffic queueing and/or copying-into hardware. Thus, queue management can be offloaded to hardware, while still retaining the debug visibility using traffic in the queue.

Consider a complex environment, such as that of FIG. 1, that does not include all the VMs deployed on a single machine, but rather includes a chain of, say, 10 VMs all communicating with each other that are deployed across different racks and different nodes within a data center. Then, to be able to inspect traffic between, say, VM7 and VM8, their location should be known. It is desired to fork the traffic from VM7 and feed it to a monitoring VM, and deliver it to VM8. Such an operation can include a scheduler tie-in as well that the locations of the VMs to copy and fork such traffic.

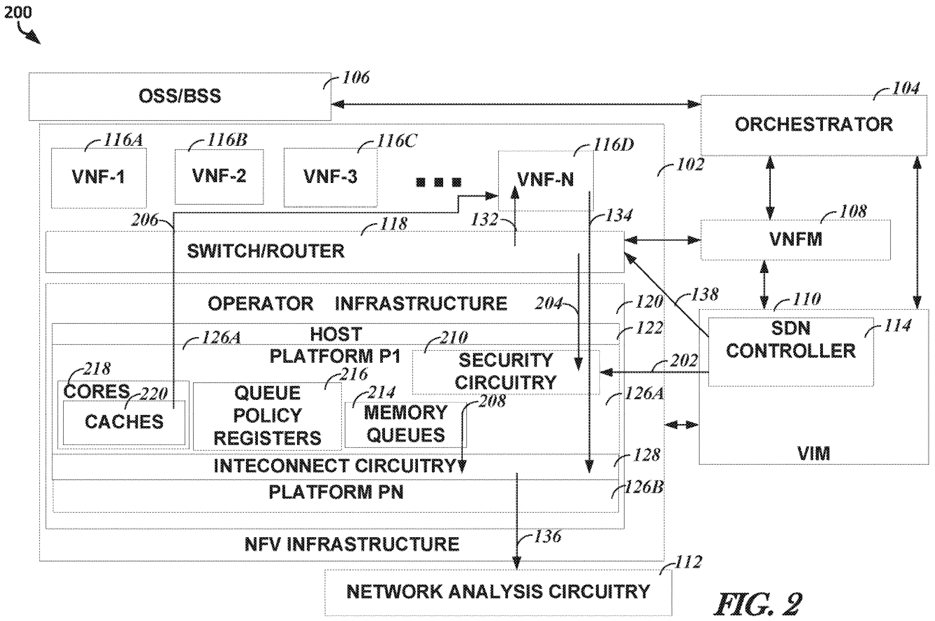

FIG. 2 illustrates, by way of example, a diagram of an embodiment of a system 200 that includes hardware acceleration. The system 200 is illustrated with system flows lines for NSM using hardware acceleration. Some of the data flow lines of FIG. 1 are not provided in FIG. 2 so as not to obscure the view of the data flow lines in FIG. 2. The system 200 includes all the same components as illustrated in FIG. 1 (note that the firmware interface 124 is not shown in FIG. 2, so as not to obscure the view of other components in FIG. 2), with some additional components. The additional components are part of the platform 126A and include security circuitry 210, memory queues 214, queue policy registers 216, cores 218, and caches 220.

NSM, using the system 200, may include providing a monitoring policy to the VNF 116D and the security circuitry 210, as indicated by arrows 138 and 132, and 202 or 204, respectively. In one or more embodiments, the security circuitry 210 may monitor all traffic on the switch/router 118, thus offloading the CPU work from the host 122.

The platform security circuitry 210 (e.g., SGX, ME, IE, etc.) may have secure out of band on-die or on-package or intra-fabric channel(s) that can be used to deliver a policy from the security circuitry to the various VNFs operating on the processor or chipset. The security circuitry 210 may receive policies from the SDN controller 114 and translate into on-processor blocks (e.g., caches, three dimensional xpoint (3DXP) or other memory, NICs, switche(s), storage, etc.) specific configuration commands and send different commands to different component blocks.

Each component (including those mentioned above) may include one or more queues 208. Queues are logical and configurable sets that include resources offered by each component. Thus, a cache can serve multiple queues and be allocated to one or more VNFs/VMs. The same arrangement may be put in place for memory, NIC, ports, etc. The SDN controller 114 and/or security circuitry 210 may configure these queues 208 at the start of the platform and optionally while the platform 126A-126B executes one or more VNFs 116A-116D.

Using the queues 208, the platform component resources can thus be "segmented" into sets of platform resource buckets which can be assigned to each VNF. One criteria of allocation being the projected or contracted SLA delivery. Platform segmented resources can be allocated per tenant, per flow, and/or per paid subscription model.

The queues 208 can process data (including network traffic). The queues 214 can be replicated per policy into one or more other queues. In other words, per the policy delivered into the component blocks from the security circuitry 210, the component blocks can replicate the entire queues onto other queues that support, or are owned and/or dedicated for NSM.

The VNF 116D can either read the queues 214 for configurable (e.g., software configurable) further processing and analysis (e.g., using the VNF 116D as a front-end software processor, such as for analytics). In other embodiments, (e.g., per policy) the queue(s) 214 may be flushed directly on to the external network for external analysis and monitoring by the analysis tools 112. In yet other embodiments, the analytics and analysis may run as part of the VNF 116D which can perform front end software processing and then the analysis tools 112.

In one or more embodiments, the interconnect circuitry 128 can be designed to write to two duplicate/mirrored descriptor tables instead of the single table that is used in the system 100. One of the tables can be used for general I/O tasks and the other can be used by the VNF 116D to review based on a relevant policy. By modifying the design of both the hardware and/or software, full line-rate security monitoring can be achieved with very little overhead in either the network device or software stack processing. A similar approach can be made available for storage or other applications.

The queue policy registers 216 include data indicating which queues (of the memory queues 208) provide data to which cores 218. The queue policy registers 216 can be read to determine a core to which duplicated traffic and other traffic is to be provided.

The cores 218 are processing cores, such as can include processing cores and/or debug cores. The cores 218 can implement the VNFs 116A-116D. The memory queues 208. The caches 220 can store instructions and/or data to be used by the cores 218 in performing their operations.

The system 200 provides a way to build an interface where a data center-level administrator (or other entity) can debug, monitor, or otherwise view data in a complicated service chain. This is a convenient way to be able to reach in from the orchestrator 104, the SDN controller 114, and, for example, monitor traffic between VM7 and VM8, and determine whether their traffic pattern is normal, or whether there is a misconfiguration in the system 100.

The security circuitry 210 can duplicate the traffic flows between a pair of VMs, for example. Such a configuration could provide the capability to do this sort of debug without necessarily having to go build a custom interface for each of the pieces of software that need to operate on the system.

The system 200 can provide a work around for software versioning issues, which can be problematic. Consider an OSS of some version that supports one interface, that is changed in the next version of the interface, creating havoc in the monitoring software systems. An encryption function, for example, SGX, can help retain encryption of the VMs and yet still provide visibility. So, at that point the security circuitry 210 can be trusted to perform the duplication.

In one or more embodiments, the interconnect circuitry 128 can create duplicated descriptor tables. Such duplication of descriptor table can be one way to help perform the debug, monitoring, or the like, perhaps without the presence of an HQM. This is one way in which a NIC could be used to duplicate traffic flows, for example.

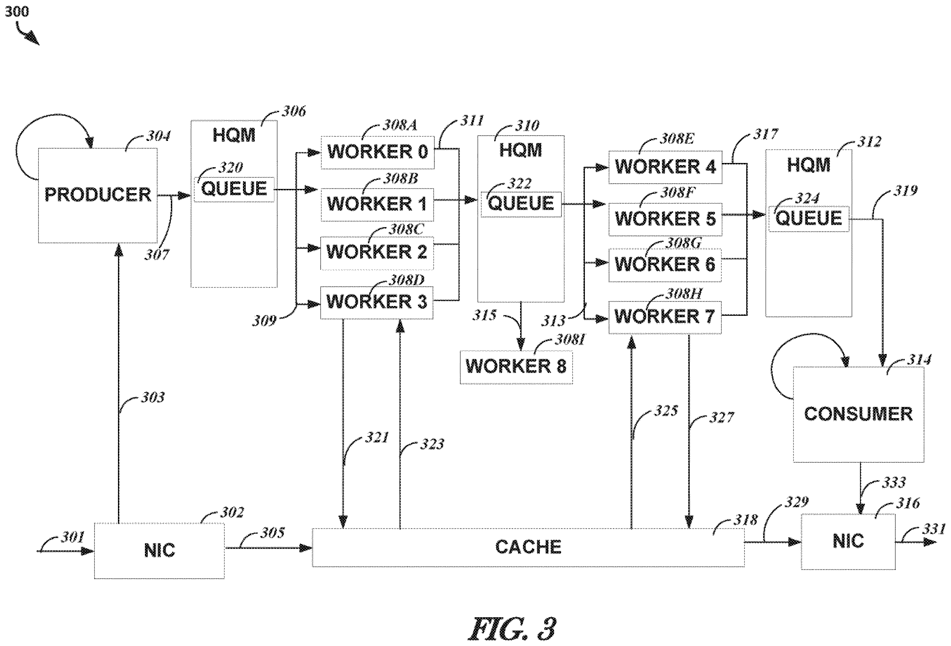

FIG. 3 illustrates, by way of example, a schematic of an embodiment of a system 300 for hardware accelerating NSM. The system 300 as illustrated includes a NIC 302, a producer 304, a first HQM 306, workers 308A, 308B, 308C, and 308D, a second HQM 310 (same or different as HQM 306), workers 308E, 308F, 308G, 308H, and 3081, a third HQM 312 (same or different as HQM 306 and/or 310), a consumer 314, another NIC 316 (same or different as NIC 302), and a cache 318 (e.g., an L3 cache).

The NIC 302 connects a compute device, such as the platform 126A-126B, to a network. The NIC, in one or more embodiments can include an HFI. The NIC 302 receives data to be processed, as indicated by data 301. The data 301 can be provided by the NIC 302 to the cache 318 and the producer 304. The producer 304 converts the data 301 to a format compatible with the workers 308A-308I. The producer 304 can add descriptors to the data to indicate what operations are to be performed on the data. The converted data can be provided to the HQM 306, such as on line 307.

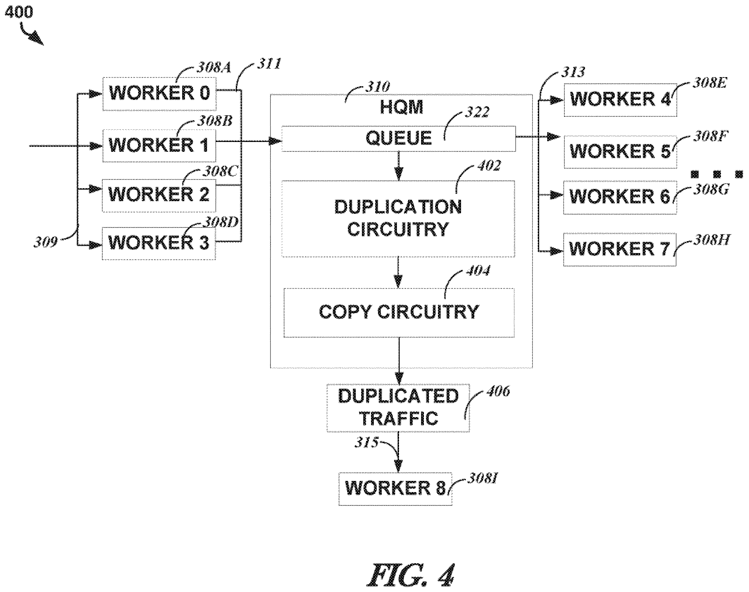

The HQM 306, 310, and 312 includes a queue 320, 322, and 324. The HQMs 306, 310, and 312 manage communication requests and can aggregate data between cores without relying on software routines. The HQMs 306, 310, and 312 may manage the replication and distribution of the NSM data to workers 308A-308I. The HQM 306, 310, and 312 can replicate and tee data, such as for debug and/or detection (or other NSM) purposes. As will be seen later, FIG. 4 illustrates an exploded view of the HQM 310. The HQM 306 is considered a first level HQM. The HQM 310 is a second-level HQM. The HQM 312 is a third level HQM.

The HQM 306, 310, and 312 form an offload acceleration engine, so that a CPU core can send a packet by creating a 16-bit descriptor and sending data using an instruction. The HQM 306, 310, and 312 then can perform up to two operations (1) forking the flow from one source to two output queues, and (2) gathering performance metrics and logging. One or both operations may be performed without disturbing the core operations. The forked output queue is then read by either another core (to be sent out, effectively a version of port mirroring with the HQM 306, 310, and 312 involved to hardware accelerate the introspection) or to the IE to be sent out over a management interface (e.g., an SDN controller or other interface). The HQM 306, 310, and 312 can offload queue management, and can help fork (e.g., "tee") traffic for debug, security monitoring (for NFV standard ETSINFV SEC013), network performance monitoring (ETSINFV specification PER001), traffic engineering, or the like. Forking is receiving data on a first connection and providing, by a component coupled to the first connection, at least a portion of the received data to at least two other components. Similarly, the statistics can help detect dropped packets, for example, without requiring the full traffic stream to be duplicated. Many statistics may be maintained in the HQM 306, 310, and 312 already; new performance counters for the number of queue entries may be split across queues. In one or more embodiments, the statistics and/or other counters may be accessible to the OS/VMM only, and not guests, such as for security reasons. Applicable, existing protocols could include simple network management protocol (SNMP), reliable event logging (RLOG), Netflow, internet protocol flow information export (IPFIX), sFlow, Internet engineering task force (IETF) standards, or the like.

The workers 308A-308D are cores 218. The workers 308A-308D are first-level workers. The workers 308A-308D receive data from the queue 320, as indicated by line 309. The operations performed by the workers 308A-308D can include, for example, per-packet work, such as can include decryption, encapsulation, de-encapsulation, firewall, encryption, decryption, compression, and/or decompression, among others. The result of operations performed by the workers 308A-308D are provided to a second-level HQM 310, as indicated by line 311. The queue temporarily stores the results and the HQM 310 provides the results to second-level workers 308E-308I. The second-level workers 308E-308H can perform packet inspection (e.g., deep packet inspection), network address translation, intrusion detection, ad insertion, routing, or the like. The results from the second-level workers 308E-H can be provided to a third level HQM 312, as indicated by line 317. A thread can be associated with an individual worker, such that the worker is responsible for the execution of the thread.

In one or more embodiments, results from the workers 308A-308D can be provided to the worker 3081, such as for debug purposes, such as indicated by line 315. In cases in which the first stage of cores has a functional bug, it is difficult to debug these cores, such as at high speeds with traditional software-based virtual switch (vswitch) solutions (e.g., the system 100). To make debug of network service function chains (SFCs) where multiple sets of complex multi-core VMs are chained together, hardware-supported debug capabilities can be important, such as to verify that the operations being performed are what is expected. The HQM 310 can be modified with hardware extensions to enable debug - more details are provided in FIG. 4.

The HQM 312 provides data to a consumer 314, as indicated by line 319. The consumer 314 converts the data from the workers 308E-308H to a form compatible with a receiver. The consumer 314 provides the converted data to the NIC 316, as indicated by line 333.

The workers 308A-308D can provide data to the cache 318, as indicated by line 321. The workers 308A-308D can receive data from the cache 318, as indicated by line 323. The workers 308E-308H can provide data to the cache 318, as indicated by line 327. The workers 308E-308H can receive data from the cache 318, as indicated by line 325. The NIC 316 can receive data from the cache 318, such as to be transmitted to a device on a network which the system 300 supports, on line 331.

FIG. 4 illustrates, by way of example, an exploded view of a smaller system 400 that forms a portion of the larger system 300 shown in FIG. 3. The system 400 as illustrated includes an exploded view of the HQM 310. The HQM 310 as illustrated includes one or more queues 322, queue entry duplication circuitry 402, and data copy circuitry 404. Duplicated traffic 406 may be provided by the HQM 310 to the worker 3081. The queue 322 can tee data provided on the line 311 to multiple workers, such as for debugging or other NSM operations. The queue 310 can provide the data to one or more of the workers 308E-308H and/or the worker 3081. The HQM 310 essentially maps input queue entries from one input queue to two output queues (e.g., a 2:1 mapping operation). The HQM 310 can include optional packet duplication circuitry 402, such as to prevent packets from changing during debug or other NSM operations, as the queue entries in the HQM 310 may be pointers. This enables one or more worker threads (e.g., associated with worker 3081 in FIG. 3) to analyze one or more packets, such as to help find bugs and/or other NSM operations, such as malware detection, anomaly detection, or the like.

The queue entry duplication circuitry 402 can help ensure that data in an entry to which a pointer points does not change by the time the data is provided to the worker 3081. The queue entry duplication circuitry 402 and data copy circuitry 404 can retrieve an entry to which a pointer points and provide the duplicated traffic 406 to the worker 3081. The copy circuitry 404 can be part of the HQM 306, 310, or 312 or external to the HQM 306, 310, or 312.

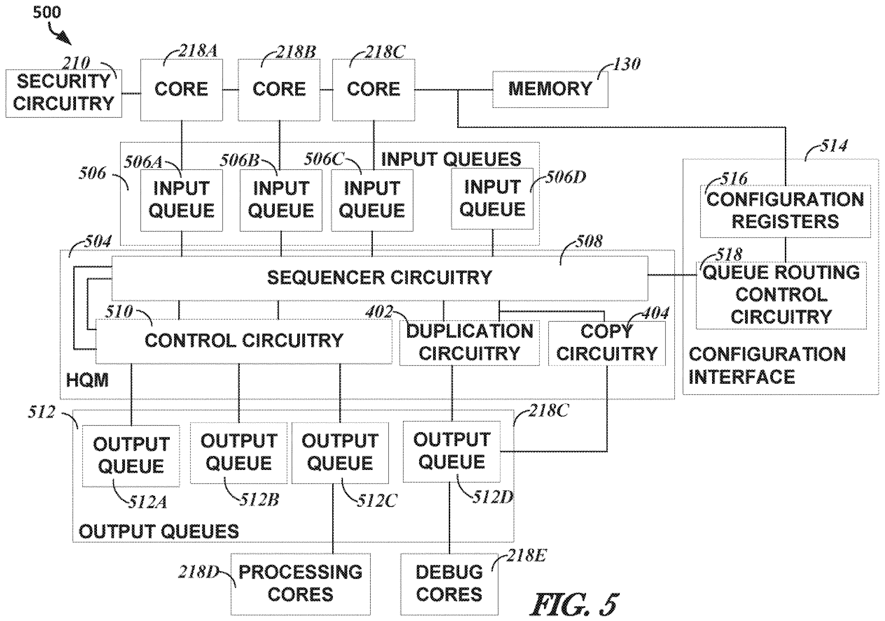

FIG. 5 illustrates, by way of example, a schematic diagram of an embodiment of a system 500. The system 500 can include an HQM 504, such as to help reduce an amount of time and/or compute cycles for NSM. The HQM 504 can help provide security and/or debug capabilities for VNF operations, such as can be performed by the core 218A-E. The system 500 as illustrated includes the cores 218A-E, security circuitry 210, the memory 130, input queues 506, an HQM 504, output queues 512, and a configuration interface 514.

The cores 218A-218E receive instructions and perform operations based on the instructions. A set of instructions, when executed by one of the processor cores 218A-218E, can allow a software program to perform a specific function via the physical actions of the cores 218A-218E. The workers 308A-308D can include respective cores 218A-218C. The input queues 506 include queues 506A, 506B, 506C, and 506D. The input queues 506 can be a part of the queue 320.

The HQM 504 as illustrated includes a sequencer circuitry 508, control circuitry, the duplication circuitry 402, and the copy circuitry 404. Items of the HQM 504 can be a part of the HQM 310. The sequencer circuitry 508 generates addresses to step through a program. The addresses generated by the sequencer circuitry 508 can be generated based on a counter, a field from an instruction, or other data from the input queues 506. The control circuitry 510 manages operations of a program. The control circuitry 510 can respond to control commands and data, such as from a user and/or the sequencer circuitry 508.

The output queues 512 can include 512A, 512B, 512C, and 512D. The output queues 512 can be a part of the queue 322. The output queues 512 manage a flow of data to the processing cores 218D and the debug cores 218E (among other cores). The debug cores 218E can include the worker 3081. The processing cores 218D can include the workers 308E-308H.

The configuration interface 514 as illustrated includes configuration registers and queue routing control circuitry 518. The configuration registers 516 include data indicating which data from the input queues 506 is to be provided for NSM operations, such as to the debug cores 218E. The queue routing control circuitry 518 can be configured to control the sequencer and cause the sequencer circuitry 508 to provide data to be debugged to the output queue 512D. The data to be debugged can be provided to one of the output queues 512A-512C and the output queue 512D, such as to provide the data to the processing cores 218D and the debug cores 218E. Data that is not to be debugged, can be provided to the processing cores 218D, without being provided to the debug cores 218E. The configuration registers 516 and queue routing control circuitry 518 allow software to reconfigure or, hardware to reconfigure, for example, out-of-band, and allow a particular queue, which is set up to route traffic from a first core to a second core (e.g., first VM to a second VM), is now set up to route traffic from the first core to the second core as well as from the first core to the third core to, for instance, enable the debug, or other monitoring.

The HQM 504 can function as a memory-mapped IO device which routes queue entries from input queues 506 through sequencing by sequencer circuitry 508, arbitration, optional reordering, and/or optional atomic flow management (e.g., by the control circuitry 510 and/or duplication circuitry 402), then to output queues 512. The queue entries in the output queues 512 can be delivered to platform threads, such as can be executed by the processing cores 218D and debug cores 218E. Such a system 500 can offload queue management and eliminate shared memory based queue structures for inter-thread data exchange, reducing overheads and improving performance. Specific changes to support flow duplication, including config registers 516, such as can be used to enable the duplication (e.g., via the teeing mode) of the sequencer circuitry 508, changes to the queue sequencer circuitry 508 and new logic to copy the queue entries to duplicate the packets (e.g., the duplication circuitry 402, which can copy the pointer of one or more of the input queues 506). Optionally, a copy circuitry 404 (internal or external to the HQM 504) can be used to copy the packets themselves rather than just the pointer as can be done by the duplication circuitry 402, so the debug cores 218E can consume the packets later without risk of the contents changing, which could lead to incorrect debug results.

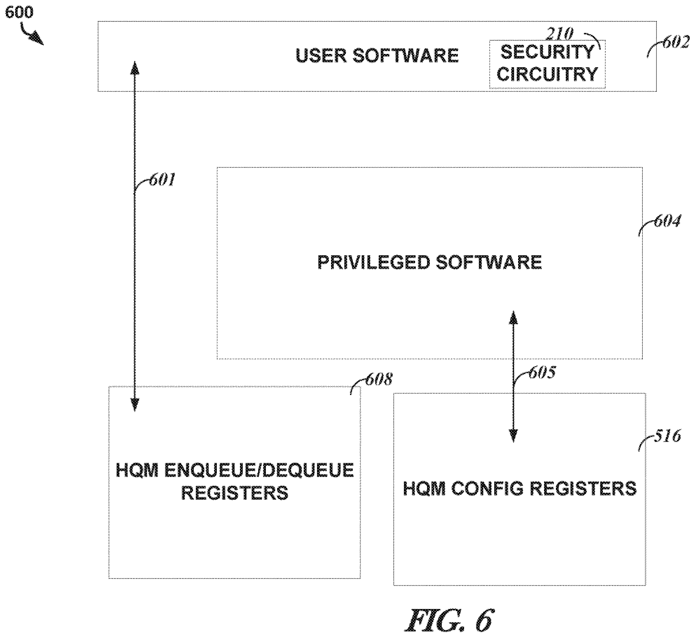

FIG. 6 illustrates, by way of example, a schematic diagram of an embodiment of a system 600. The system 600 as illustrated includes software configuration flow lines. An administrator can use privileged software 604 (e.g., an OS, VMM, an Administrative SGX Enclave, or an Admin's VM memory encrypted VM/VNF), such as to configure the HQM config registers 516 to cause the packets (or pointers) to be duplicated, such as by the duplication circuitry 402 or the copy circuitry 404. Alternatively, the administrator can grant privileged rights to a tenant to set the security monitoring policy to an SGX (or, VM Memory Encrypted) VM-TME enabled tenant. The guests then use the HQM as usual without modifications - this is valuable as changing the VMs could be complex and could change the nature of the bugs exposed, in particular timing race conditions or multithreaded synchronization issues. This way different points in a service function chain can also be examined without difficult reconfiguration to multiple stages of the pipeline.

FIG. 6 illustrates possible modification flows for the registers 516. To set up the registers 516, the privileged software 604 can modify the HQM config registers 516 to duplicate a selected traffic flow. Then, depending on what kind of monitoring is to be performed on the duplicated data, the data itself can be duplicated, or just the pointers can be duplicated. Depending on the configuration of the registers 516, one can analyze the data and determine whether it is configured as expected or flowing as expected, for example. The copies of the data stream can be provided, sometime later, for post-processing. If, for example, the data is a high-bandwidth flow, or the data is a flow in which the VMs creating the data cannot necessarily be controlled, a full duplication of the flows may be more valuable.

There are some interface options shown in FIG. 6. The debug cores 218E (see FIG. 5), for example, could operate to dequeue through a debug API (e.g., part of the OS), or from a user space directly, such as indicated by line 601. In such embodiments, at least a portion of the HQMs 306, 310, and 312 can be mapped directly into user space.

Current ARM and million instructions per second (MIPS) systems can help perform physical network functions, and use dedicated fixed function component engines for traffic separation. Embodiments discussed herein can be implemented using general purpose ARM systems or others as platform architects start addressing dynamic, migration-driven, and heterogeneous NFV/SDN workloads and systems, such as software-driven cloud-portable NFV systems.

One or more embodiments discussed herein may be used in a 5G/Mobile Edge Cloud (MEC) environment, such as for a wireless base station customer. An SoC including an HQM as discussed herein can be useful in an SGX or other security enabled environment.

Elements of this invention can enable an interface architecture or other communication platform to be operationally ready for NFV and SDN deployments. As a number of cores increase on interface architecture (IA) platforms, multiple, heterogeneous VNFs/VMs may be deployed on same platform. NSM provides an operational visibility component to an operator network deployment. Embodiments herein may help assure that IA provides line rate and secure network traffic metrics and traffic elements for off-platform or on-platform monitoring.

To help explain the advantages of some embodiments, a few use cases are provided herein. Consider multiple compute devices (e.g., Box A, Box B, and Box C) connected via a standard Ethernet switch. Box A communicates with Box B, and Box B communicates with Box C, and then, to the rest of a network. However, when the functionality of the Boxes A-C is consolidated onto a server as VMs or VNFs, there are only a few different options for how to connect the functionality. One is via raw shared memory, which has security and robust operational problems. Another is a virtual switch, which is slow. A third is using hardware acceleration, like the HQM discussed herein. But, when using HQM, there is generally bug visibility into the functionality of the Boxes A-C. Assume Box B is in the middle of the service function chain (i.e., the functionality of Boxes A-C connected together), and Box B is misconfigured and as a result, dropping packets.

The visibility in a typical configuration would be at the input to Box A and at the output from Box C. Such a configuration makes it difficult to determine which of the Boxes A-C is misconfigured, or malfunctioning, which makes it difficult to figure out which Box to go debug in more detail. With one or more embodiments, the data (e.g., packet stream) can be forked into a debug stream. The packet stream between Box A and Box B could be inspected, for example, such as to make sure that those packets are properly being routed, or that Box A is operating properly. Additionally, or alternatively, a test point can be inserted between Boxes B and C. Using one or more embodiments, the operations of Box B could be debugged. Worker 8, in the embodiments of FIGS. 3 and 4 can operate to determine whether operations being performed are the requested operations, one or more data flows are being processed and passed for further processing, packets are being dropped, or the like.

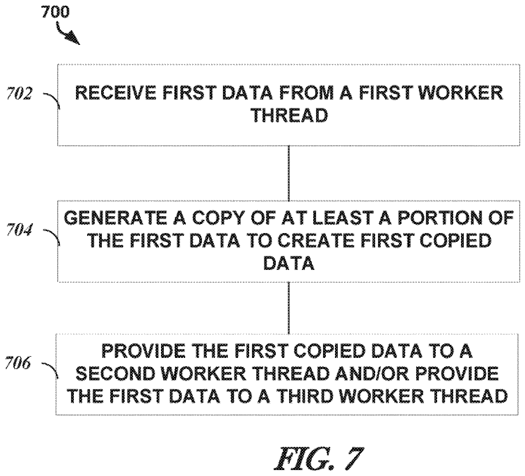

FIG. 7 illustrates, by way of example, a diagram of an embodiment of a method 700 for NSM, such as can include hardware acceleration. The method 700 as illustrated includes receiving (at an HQM) first data from at least a first worker thread, at operation 702; generating (at copy circuitry or duplication circuitry of the HQM) a copy of at least a portion of the first data to create first copied data, at operation 704; and (a) providing the first copied data to a second worker thread to perform network security monitoring, and/or (b) providing the first data to a third worker thread, at operation 706. The method 700 can further include, wherein the second worker thread is a debug thread and the third worker thread can include packet inspection, network address translation, intrusion detection, ad insertion, and/or routing.

The method 700 can further include, wherein the first worker thread executes on a first processing core, the second worker thread executes on a second processing core, and the third worker thread executes on a third processing core, the first, second, and third processing cores comprising separate processing cores. The method 700 can further include, wherein the first worker thread executes on a first virtual machine, the second worker thread executes on a second virtual machine, and the third worker thread executes on a third virtual machine, the first, second, and third processing virtual machines comprising separate virtual machines.

The method 700 can further include, wherein the operation 704 includes copying a pointer to the first data. The method 700, can further include routing the first data and the first copied data to respective output queues coupled between second and third processing cores and a hardware queue manager. The method 700, can further include receiving indication information to indicate data to be copied from a plurality of input queues and providing the data to be copied to data duplication circuitry.

"Circuitry "as used herein means electrical and/or electronic components, such as can include one or more transistors, resistors, capacitors, inductors, diodes, logic gates, multiplexers, oscillators, buffers, modulators, regulators, amplifiers, demodulators, radios (e.g., transmit or receive radios or transceivers), sensors (e.g., a transducer that converts one form of energy (e.g., light, heat, electrical, mechanical, or other energy) to another form of energy), or the like.

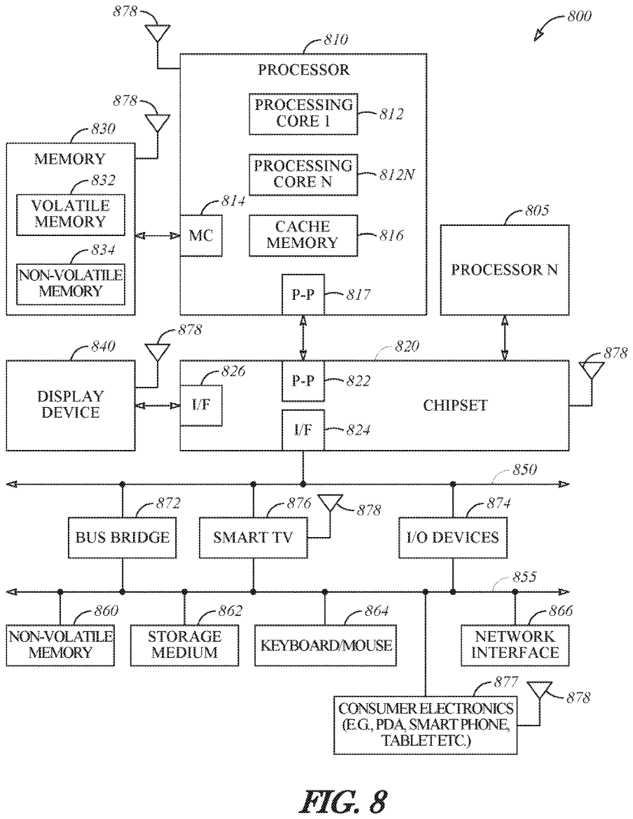

FIG. 8 illustrates, by way of example, a block diagram of an embodiment of a system 800. In one or more embodiments, the system 800 includes one or more components that can be included in the NFV infrastructure 102, the orchestrator 104, the OSS/BSS 106, the VNFM 108, the VIM 110, the SDN controller 114, the network analysis tools 112, the memory 130, the switch/router 118, the operator infrastructure 120, the host 122, the firmware interface 124, the platform 126A-126B, the security circuitry 210, the memory queues 208, the queue policy registers 216, the cores 218, the caches 220, the NIC 302, the interconnect circuitry 128, the producer 304, the HQM 306, 310, and/or 312, the worker 308A-308I, the consumer 314, the NIC 316, the cache 318, the duplication circuitry 402, the copy circuitry 404, the configuration interface 514, the sequencer circuitry 508, the control circuitry 510, the cores 218A-218E, the input queues 506, the output queues 512, the HQM enqueue/dequeue registers 608, or other component of the FIGS. In one or more embodiments, one or more of NFV infrastructure 102, the orchestrator 104, the OSS/BSS 106, the VNFM 108, the VIM 110, the SDN controller 114, the network analysis tools 112, the memory 130, the switch/router 118, the operator infrastructure 120, the host 122, the firmware interface 124, the platform 126A-126B, the security circuitry 210, the memory queues 208, the queue policy registers 216, the cores 218, the caches 220, the NIC 302, the interconnect circuitry 128, the producer 304, the HQM 306, 310, and/or 312, the worker 308A-308I, the consumer 314, the NIC 316, the cache 318, the duplication circuitry 402, the copy circuitry 404, the configuration interface 514, the sequencer circuitry 508, the control circuitry 510, the cores 218A-218E, the input queues 506, the output queues 512, the HQM enqueue/dequeue registers 608, or other component of FIGS. 1-7, can be implemented, at least partially, using one or more components of the system 800.

In one embodiment, processor 810 has one or more processing cores 812 and 812N, where 812N represents the Nth processing core inside processor 810 where N is a positive integer. In one embodiment, system 800 includes multiple processors including 810 and 805, where processor 805 has logic similar to or identical to the logic of processor 810. In some embodiments, processing core 812 includes, but is not limited to, pre-fetch logic to fetch instructions, decode logic to decode the instructions, execution logic to execute instructions and the like. In some embodiments, processor 810 has a cache memory 816 to cache instructions and/or data for system 800. Cache memory 816 may be organized into a hierarchal structure including one or more levels of cache memory.

In some embodiments, processor 810 includes a memory controller 814, which is operable to perform functions that enable the processor 810 to access and communicate with memory 830 that includes a volatile memory 832 and/or a non-volatile memory 834. In some embodiments, processor 810 is coupled with memory 830 and chipset 820. Processor 810 may also be coupled to a wireless antenna 878 to communicate with any device configured to transmit and/or receive wireless signals. In one embodiment, the wireless antenna interface 878 operates in accordance with, but is not limited to, the IEEE 802.11 standard and its related family, Home Plug AV (HPAV), Ultra Wide Band (UWB), Bluetooth, WiMax, or any form of wireless communication protocol.

In some embodiments, volatile memory 832 includes, but is not limited to, Synchronous Dynamic Random Access Memory (SDRAM), Dynamic Random Access Memory (DRAM), RAMBUS Dynamic Random Access Memory (RDRAM), and/or any other type of random access memory device. Non-volatile memory 834 includes, but is not limited to, flash memory, phase change memory (PCM), read-only memory (ROM), electrically erasable programmable read-only memory (EEPROM), or any other type of non-volatile memory device.

Memory 830 stores information and instructions to be executed by processor 810. In one embodiment, memory 830 may also store temporary variables or other intermediate information while processor 810 is executing instructions. The memory 830 is an example of a machine-readable medium. While a machine-readable medium may include a single medium, the term "machine-readable medium" may include a single medium or multiple media (e.g., a centralized or distributed database, and/or associated caches and servers).

The term "machine-readable medium" may include any medium that is capable of storing, encoding, or carrying instructions for execution by a machine (e.g., circuitry, or the like) and that cause the machine to perform any one or more of the techniques of the present disclosure; or that is capable of storing, encoding or carrying data structures used by or associated with such instructions. In other words, the circuitry discussed herein can include instructions and can therefore be termed a machine-readable medium in the context of various embodiments. Other non-limiting machine-readable medium examples may include solid-state memories, and optical and magnetic media. Specific examples of machine-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In the illustrated embodiment, chipset 820 connects with processor 810 via Point-to-Point (PtP or P-P) interfaces 817 and 822. Chipset 820 enables processor 810 to connect to other elements in system 800. In some embodiments of the invention, interfaces 817 and 822 operate in accordance with a PtP communication protocol such as the Intel® QuickPath Interconnect (QPI) or the like. In other embodiments, a different interconnect may be used.

In some embodiments, chipset 820 is operable to communicate with processor 810, 805N, display device 840, and other devices. Chipset 820 may also be coupled to a wireless antenna 878 to communicate with any device configured to transmit and/or receive wireless signals.

Chipset 820 connects to display device 840 via interface 826. Display device 840 may be, for example, a liquid crystal display (LCD), a plasma display, cathode ray tube (CRT) display, or any other form of visual display device. In some embodiments of the invention, processor 810 and chipset 820 are merged into a single SOC. In addition, chipset 820 connects to one or more buses 850 and 855 that interconnect various elements 874, 860, 862, 864, and 866. Buses 850 and 855 may be interconnected together via a bus bridge 872. In one embodiment, chipset 820 couples with a non-volatile memory 860, a mass storage device(s) 862, a keyboard/mouse 864, and a network interface 866 via interface 824 and/or 804, etc.

In one embodiment, mass storage device 862 includes, but is not limited to, a solid state drive, a hard disk drive, a universal serial bus flash memory drive, or any other form of computer data storage medium. In one embodiment, network interface 866 is implemented by any type of well-known network interface standard including, but not limited to, an Ethernet interface, a universal serial bus (USB) interface, a Peripheral Component Interconnect (PCI) Express interface, a wireless interface and/or any other suitable type of interface. In one embodiment, the wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the components shown in FIG. 8 are depicted as separate blocks within the system 800, the functions performed by some of these blocks may be integrated within a single semiconductor circuit or may be implemented using two or more separate integrated circuits. For example, although cache memory 816 is depicted as a separate block within processor 810, cache memory 816 (or selected aspects of 816) can be incorporated into processor core 812.

### EXAMPLES AND NOTES

The present subject matter may be described by way of several examples.
Example 1 can include a hardware queue manager comprising an input interface coupled to a plurality of input queues, the input interface to receive first data from at least a first worker thread through an input queue of the plurality of input queues, queue duplication circuitry to generate a copy of at least a portion of the first data to create first copied data, and an output interface coupled to a plurality of output queues, the output interface to (a) provide the first copied data to a second worker thread coupled to a first output queue of the plurality of output queues, and (b) provide at least a portion of the first data to a third worker thread coupled to a second output queue of the plurality of output queues.
In Example 2, Example 1 may further include, wherein the first worker thread executes on a first processing core, the second worker thread executes on a second processing core, and the third worker thread executes on a third processing core, the first, second, and third processing cores comprising separate processing cores.
In Example 3, Example 2 may further include, wherein the first worker thread executes on a first virtual machine, the second worker thread executes on a second virtual machine, and the third worker thread executes on a third virtual machine, the first, second, and third processing virtual machines comprising separate virtual machines.
In Example 4, at least one of Examples 1-3 may further include, wherein the queue duplication circuitry is to copy a pointer to the first data.
In Example 5, at least one of Examples 1-4 may further include data copy circuitry to copy the first data.
In Example 6, at least one of Examples 1-5 may further include queue routing control circuitry to route the first data and the first copied data to respective output queues of the plurality of output queues coupled between the second and third processing cores and the hardware queue manager.
In Example 7, Example 6 may further include sequencer circuitry to receive indication information to indicate data to be copied from the plurality of input queues, and provide the data to be copied to the third processing core, and a copy of the data to be copied, to the duplication circuitry.
Example 8 includes a non-transitory machine-readable medium including instructions that, when executed on a machine, cause the machine to perform operations including receiving, from an input of a plurality of input queues coupled to a hardware queue manager, first data from at least a first worker thread, generating a copy of at least a portion of the first data to create first copied data, and (a) providing the first copied data to a second worker thread coupled to a first output queue of a plurality of output queues, and (b) providing at least a portion of the first data to a third worker thread coupled to a second output queue of the plurality of output queues.
In Example 9, Example 8 may further include, wherein the second worker thread is a debug thread and the third worker thread includes packet inspection, network address translation, intrusion detection, ad insertion, or routing.
In Example 10, at least one of Examples 8-9 may further include, wherein the first worker thread executes on a first processing core, the second worker thread executes on a second processing core, and the third worker thread executes on a third processing core, the first, second, and third processing cores comprising separate processing cores.
In Example 11, at least one of Example 8-9 may further include, wherein the first worker thread executes on a first virtual machine, the second worker thread executes on a second virtual machine, and the third worker thread executes on a third virtual machine, the first, second, and third processing virtual machines comprising separate virtual machines.
In Example 12, at least one of Examples 8-11 may further include, wherein generating the copy of at least the portion of the first includes copying a pointer to the first data.
In Example 13, at least one of Examples 8-12 may further include, wherein the operations further comprise routing the first data and the first copied data to respective output queues of the plurality of output queues coupled between second and third processing cores and a hardware queue manager.
In Example 14, Example 13 may further include receiving indication information to indicate data to be copied from the plurality of input queues and providing the data to be copied to data duplication circuitry.
Example 15 includes a method for network security monitoring, the method comprising receiving, at an input interface of a hardware queue manager and through an input queue of a plurality of input queues coupled to the hardware queue manager, first data from a first worker thread, generating, at the hardware queue manager, a copy of at least a portion of the first data to create first copied data, and (a) providing the first copied data to a second worker thread to perform network security monitoring, the second worker thread coupled to a first output queue of a plurality of output queues coupled to the hardware queue manager, and (b) providing at least a portion of the first data to a third worker thread through a second output queue of the plurality of output queues coupled to the hardware queue manager.
In Example 16, Example 15 may further include, wherein the second worker thread is a debug thread and the third worker thread includes packet inspection, network address translation, intrusion detection, ad insertion, or routing.
In Example 17, at least one of Examples 15-16 may further include, wherein the first worker thread executes on a first processing core, the second worker thread executes on a second processing core, and the third worker thread executes on a third processing core, the first, second, and third processing cores comprising separate processing cores.
In Example 18, at least one of Examples 15-16 may further include, wherein the first worker thread executes on a first virtual machine, the second worker thread executes on a second virtual machine, and the third worker thread executes on a third virtual machine, the first, second, and third processing virtual machines comprising separate virtual machines.
In Example 19, at least one of Examples 15-18 may further include, wherein generating the copy of at least the portion of the first includes copying a pointer to the first data.
In Example 20, at least one of Examples 15-19 may further include, wherein the operations further comprise routing the first data and the first copied data to respective output queues of the plurality of output queues coupled between second and third processing cores and a hardware queue manager.
In Example 21, Example 20 may further include receiving indication information to indicate data to be copied from the plurality of input queues and providing the data to be copied to data duplication circuitry.
Example 22 includes a system comprising a network function virtualization infrastructure comprising a plurality of processing cores to perform operations of virtual network functions and security circuitry to monitor and copy traffic of the processing cores, a controller coupled to the security circuitry to provide a security policy defining traffic to be monitored and indicating whether the security circuitry is to copy data or a pointer to the data of the traffic, and a network analysis tool to determine when the copied traffic includes a bug, a dropped packet, or a security threat.
In Example 23, Example 22 may further include, wherein the controller is further to determine which core of the plurality of processing cores performs a specific virtual network function of the plurality of virtual network functions, and wherein the security policy, when executed, is to indicate the determined core, and the security circuitry is to copy the traffic from the determined core.
In Example 24, Example 23 may further include a switch or router and wherein the controller is further to provide the security policy to the security circuitry through the switch or router.
In Example 25, Example 24 may further include a plurality of memory queues in a memory, to receive the copied traffic from the security circuitry and provide the copied traffic to the network analysis circuitry.

Each of these non-limiting examples can stand on its own, or can be combined in various permutations or combinations with one or more of the other examples. "Non-transitory" merely means that the medium comprises a form of tangible media.

The above detailed description includes references to the accompanying drawings, which form a part of the detailed description. The drawings show, by way of illustration, specific embodiments in which methods, apparatuses, and systems discussed herein can be practiced. These embodiments are also referred to herein as "examples." Such examples can include elements in addition to those shown or described. However, this document is intended to include examples in which only those elements shown or described are provided. Moreover, examples using any combination or permutation of those elements shown or described (or one or more aspects thereof) herein, either with respect to a particular example (or one or more aspects thereof), or with respect to other examples (or one or more aspects thereof) shown or described herein, are also included as example embodiments.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in this Description of Embodiments, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Description of Embodiments as examples or embodiments, with each claim standing on its own as a separate embodiment, and it is contemplated that such embodiments can be combined with each other in various combinations or permutations. The scope of the invention should be determined regarding the appended claims, along with the full scope of equivalents to which such claims are entitled.

## Claims

1. A hardware queue manager (310, 504) comprising:
an input interface for coupling to a plurality of input queues, the input interface being adapted to receive first data from at least a first worker thread (308A-308D) from an input queue of the plurality of input queues; and
a queue duplication circuitry (404) to generate a copy of at least a portion of the first data to create first copied data; the hardware queue manager further comprising
an output interface for coupling to a plurality of output queues, the output interface being adapted to (a) provide the first copied data to a second worker thread (3081) to perform security monitoring; the second worker threat coupled to a first output queue of the plurality of output queues coupled to the hardware queue manager; the second worker thread being a debug thread, and to (b) provide at least a portion of the first data to a third worker threat coupled to a second output queue of the plurality of output queues, the third worker thread including packet inspection, network address translation, intrusion detection, ad insertion, or routing.

2. The apparatus of claim 1, wherein the first worker thread executes on a first processing core (218A-C), the second worker thread executes on a second processing core (218D-E), and the third worker thread executes on a third processing core (218D-E), the first, second, and third processing cores comprising separate processing cores.

3. The apparatus of claim 1, wherein the first worker thread executes on a first virtual machine, the second worker thread executes on a second virtual machine, and the third worker thread executes on a third virtual machine, the first, second, and third processing virtual machines comprising separate virtual machines.

4. The apparatus of claim 1, wherein the queue duplication circuitry (402) is to copy a pointer to the first data.

5. The apparatus of claim 4, further comprising data copy circuitry (404) to copy the first data.

6. The apparatus of claim 1, further comprising queue routing control circuitry (518) to route the first data and the first copied data to respective output queues coupled between the second and third processing cores and the hardware queue manager.

7. The apparatus of claim 6, further comprising sequencer circuitry (508) to receive indication information to indicate data to be copied from a plurality of input queues, and provide the data to be copied to the third processing core, and a copy of the data to be copied, to the duplication circuitry.

8. A method for network security monitoring, the method comprising:
receiving, at an input interface of a hardware queue manager (310, 504) and through an input queue of a plurality of input queues coupled to the hardware queue manager, first data from a first worker thread; and
generating, by a queue duplication circuitry of the hardware queue manager, a copy of at least a portion of the first data to create first copied data; the method further comprising, by an output interface of the hardware queue manager,
(a) providing the first copied data to a second worker thread to perform network security monitoring, the second worker thread coupled to a first output queue of a plurality of output queues coupled to the hardware queue manager wherein the second worker thread is a debug thread, and
(b) providing at least a portion of the first data to a third worker thread through a second output queue of the plurality of output queues coupled to the hardware queue manager wherein the third worker thread includes packet inspection, network address translation, intrusion detection, ad insertion, or routing.

9. The method of claim 8, wherein the first worker thread executes on a first processing core, the second worker thread executes on a second processing core, and the third worker thread executes on a third processing core, the first, second, and third processing cores comprising separate processing cores.

10. The method of claim 8, wherein the first worker thread executes on a first virtual machine, the second worker thread executes on a second virtual machine, and the third worker thread executes on a third virtual machine, the first, second, and third processing virtual machines comprising separate virtual machines.

11. The method of any of claims 8 to 10, wherein generating the copy of at least the portion of the first includes copying a pointer to the first data.

12. The method of any of claims 8 to 11, wherein the operations further comprise routing the first data and the first copied data to respective output queues coupled between second and third processing cores and a hardware queue manager.

13. The method of claim 12, wherein the operations further comprise receiving indication information to indicate data to be copied from a plurality of input queues and providing the data to be copied to data duplication circuitry.

14. A computer readable medium having stored thereon instructions that, when executed on a machine, cause the machine to perform the method of any of claims 8 to 13.

## Patentansprüche

1. Hardware-Warteschlangenmanager (310, 504), der Folgendes umfasst:
eine Eingangsschnittstelle zum Koppeln an mehrere Eingangswarteschlangen, wobei die Eingangsschnittstelle ausgelegt ist, erste Daten von mindestens einem ersten Arbeiter-"Thread" (308A-308D) von einer Eingangswarteschlange der mehreren Eingangswarteschlangen zu empfangen; und
eine Warteschlangenvervielfältigungsschaltung (404), um eine Kopie mindestens eines Teils der ersten Daten zu erzeugen, um erste kopierte Daten zu erzeugen; wobei der Hardware-Warteschlangenmanager ferner Folgendes umfasst:
eine Ausgangsschnittstelle zum Koppeln an mehrere Ausgangswarteschlangen, wobei die Ausgangsschnittstelle ausgelegt ist, um (a) die ersten kopierten Daten an einen zweiten Arbeiter-"Thread" (3081) zu liefern, um eine Sicherheitsüberwachung auszuführen; wobei der zweite Arbeiter-"Thread" an eine erste Ausgangswarteschlange der mehreren Ausgangswarteschlangen gekoppelt ist, die an den Hardware-Warteschlangenmanager gekoppelt sind; wobei der zweite Arbeiter-"Thread" ein "Debug-Thread" ist, und um (b) mindestens einen Teil der ersten Daten an einen dritten Arbeiter-"Thread" zu liefern, der an eine zweite Ausgangswarteschlange der mehreren Ausgangswarteschlangen gekoppelt ist, wobei der dritte Arbeiter-"Thread" eine Paketprüfung, eine Netzadressenübersetzung, eine Einbruchsdetektion, eine Anzeigenschaltung oder ein Weiterleiten enthält.

2. Vorrichtung nach Anspruch 1, wobei der erste Arbeiter-"Thread" auf einem ersten Verarbeitungskern (218A-C) läuft, der zweite Arbeiter-"Thread" auf einem zweiten Verarbeitungskern (218D-E) läuft und der dritte Arbeiter-"Thread" auf einem dritten Verarbeitungskern (218D-E) läuft, wobei der erste, der zweite und der dritte Verarbeitungskern getrennte Verarbeitungskerne umfassen.

3. Vorrichtung nach Anspruch 1, wobei der erste Arbeiter-"Thread" auf einer ersten virtuellen Maschine läuft, der zweite Arbeiter-"Thread" auf einer zweiten virtuellen Maschine läuft und der dritte Arbeiter-"Thread" auf einer dritten virtuellen Maschine läuft, wobei die erste, die zweite und die dritte virtuelle Verarbeitungsmaschine getrennte virtuelle Maschinen umfassen.

4. Vorrichtung nach Anspruch 1, wobei die Warteschlangenvervielfältigungsschaltung (402) dazu dient, einen Zeiger auf die ersten Daten zu kopieren.

5. Vorrichtung nach Anspruch 4, die ferner eine Datenkopierschaltung (404) umfasst, um die ersten Daten zu kopieren.

6. Vorrichtung nach Anspruch 1, die ferner eine Warteschlangenweiterleitungssteuerschaltung (518) umfasst, um die ersten Daten und die ersten kopierten Daten an jeweilige Ausgangswarteschlangen, die zwischen den zweiten und den dritten Verarbeitungskern und den Hardware-Warteschlangenmanager gekoppelt sind, weiterzuleiten.

7. Vorrichtung nach Anspruch 6, die ferner eine Ablaufsteuerungsschaltung (508) umfasst, um Angabeinformationen zu empfangen, um Daten anzugeben, die von mehreren Eingangswarteschlangen zu kopieren sind, und die zu kopierenden Daten an den dritten Verarbeitungskern und eine Kopie der zu kopierenden Daten an die Kopierschaltung zu liefern.

8. Verfahren für eine Netzsicherheitsüberwachung, wobei das Verfahren Folgendes umfasst:
Empfangen an einer Eingangsschnittstelle eines Hardware-Warteschlangenmanagers (310, 504) und durch eine Eingangswarteschlange mehrerer Eingangswarteschlangen, die an den Hardware-Warteschlangenmanager gekoppelt sind, erster Daten von einem ersten Arbeiter-"Thread"; und
Erzeugen durch eine Warteschlangenvervielfältigungsschaltung des Hardware-Warteschlangenmanagers einer Kopie mindestens eines Teils der ersten Daten, um erste kopierte Daten zu erzeugen; wobei das Verfahren ferner umfasst, durch eine Ausgangsschnittstelle des Hardware-Warteschlangenmanagers
(a) die ersten kopierten Daten an einen zweiten Arbeiter-"Thread" zu liefern, um eine Netzsicherheitsüberwachung auszuführen, wobei der zweite Arbeiter-"Thread" an eine erste Ausgangswarteschlange der mehreren Ausgangswarteschlangen gekoppelt ist, die an den Hardware-Warteschlangenmanager gekoppelt sind, wobei der zweite Arbeiter-"Thread" ein "Debug-Thread" ist, und
(b) mindestens einen Teil der ersten Daten an einen dritten Arbeiter-"Thread" durch eine zweite Ausgangswarteschlange der mehreren Ausgangswarteschlangen, die an den Hardware-Warteschlangenmanager gekoppelt sind, zu liefern, wobei der dritte Arbeiter-"Thread" eine Paketprüfung, eine Netzadressenübersetzung, eine Einbruchsdetektion, eine Anzeigenschaltung oder ein Weiterleiten enthält.

9. Verfahren nach Anspruch 8, wobei der erste Arbeiter-"Thread" auf einem ersten Verarbeitungskern läuft, der zweite Arbeiter-"Thread" auf einem zweiten Verarbeitungskern läuft und der dritte Arbeiter-"Thread" auf einem dritten Verarbeitungskern läuft, wobei der erste, der zweite und der dritte Verarbeitungskern getrennte Verarbeitungskerne umfassen.

10. Verfahren nach Anspruch 8, wobei der erste Arbeiter-"Thread" auf einer ersten virtuellen Maschine läuft, der zweite Arbeiter-"Thread" auf einer zweiten virtuellen Maschine läuft und der dritte Arbeiter-"Thread" auf einer dritten virtuellen Maschine läuft, wobei die erste, die zweite und die dritte virtuelle Verarbeitungsmaschine getrennte virtuelle Maschinen umfassen.

11. Verfahren nach einem der Ansprüche 8 bis 10, wobei das Erzeugen der Kopie zumindest des Teils der ersten enthält, einen Zeiger auf die ersten Daten zu kopieren.

12. Verfahren nach einem der Ansprüche 8 bis 11, wobei die Vorgänge ferner umfassen, die ersten Daten und die ersten kopierten Daten an jeweilige Ausgangswarteschlangen, die zwischen den zweiten und den dritten Verarbeitungskern und den Hardware-Warteschlangenmanager gekoppelt sind, weiterzuleiten.

13. Verfahren nach Anspruch 12, wobei die Vorgänge ferner umfassen, Angabeinformationen zu empfangen, um Daten anzugeben, die von mehreren Eingangswarteschlangen zu kopieren sind, und die zu kopierenden Daten an die Datenvervielfältigungsschaltung zu liefern.

14. Computerlesbares Medium mit auf ihm gespeicherten Anweisungen, die dann, wenn sie auf einer Maschine ausgeführt werden, bewirken, dass die Maschine das Verfahren nach einem der Ansprüche 8 bis 13 ausführt.

## Revendications

1. Gestionnaire de files d'attente matériel (310, 504) comprenant :
une interface d'entrée pour le couplage à une pluralité de files d'attente d'entrée, l'interface d'entrée étant adaptée pour recevoir des premières données d'au moins un fil de premier travailleur (308A-308D) depuis une file d'attente d'entrée de la pluralité de files d'attente d'entrée ; et
un circuit de duplication de file d'attente (404) pour générer une copie d'au moins une partie des premières données afin de créer des premières données copiées ; le gestionnaire de files d'attente matériel comprenant en outre une interface de sortie pour le couplage à une pluralité de files d'attente de sortie, l'interface de sortie étant adaptée pour (a) fournir les premières données copiées à un fil de deuxième travailleur (3081) pour effectuer une surveillance de sécurité ; le fil du deuxième travailleur étant couplé à une première file d'attente de sortie de la pluralité de files d'attente de sortie couplées au gestionnaire de files d'attente matériel ; le fil du deuxième travailleur étant un fil de débogage, et pour (b) fournir au moins une partie des premières données à un fil de troisième travailleur couplé à une deuxième file d'attente de sortie de la pluralité de files d'attente de sortie, le fil de troisième travailleur comprenant l'inspection de paquets, la traduction d'adresse réseau, la détection d'intrusion, l'insertion d'annonces ou le routage.

2. Appareil selon la revendication 1, dans lequel le fil du premier travailleur s'exécute sur un premier cœur de traitement (218A-C), le fil du deuxième travailleur s'exécute sur un deuxième cœur de traitement (218D-E), et le fil du troisième travailleur s'exécute sur un troisième cœur de traitement (218D-E), les premier, deuxième et troisième cœurs de traitement comprenant des cœurs de traitement séparés.

3. Appareil selon la revendication 1, dans lequel le fil du premier travailleur s'exécute sur une première machine virtuelle, le fil du deuxième travailleur s'exécute sur une deuxième machine virtuelle et le fil du troisième travailleur s'exécute sur une troisième machine virtuelle, les première, deuxième et troisième machines virtuelles de traitement comprenant des machines virtuelles séparées.

4. Appareil selon la revendication 1, dans lequel le circuit de duplication de file d'attente (402) doit copier un pointeur vers les premières données.

5. Appareil selon la revendication 4, comprenant en outre un circuit de copie de données (404) pour copier les premières données.

6. Appareil selon la revendication 1, comprenant en outre un circuit de contrôle de routage de file d'attente (518) pour router les premières données et les premières données copiées vers des files d'attente de sortie respectives couplées entre les deuxième et troisième cœurs de traitement et le gestionnaire de files d'attente matériel.

7. Appareil selon la revendication 6, comprenant en outre un circuit séquenceur (508) pour recevoir des informations d'indication afin d'indiquer les données à copier à partir d'une pluralité de files d'attente d'entrée, et pour fournir les données à copier au troisième cœur de traitement, et une copie des données à copier, au circuit de duplication.

8. Procédé de surveillance de sécurité de réseau, le procédé comprenant les étapes suivantes :
recevoir, au niveau d'une interface d'entrée d'un gestionnaire de files d'attente matériel (310, 504) et par l'intermédiaire d'une file d'attente d'entrée d'une pluralité de files d'attente d'entrée couplées au gestionnaire de files d'attente matériel, des premières données provenant d'un fil d'un premier travailleur ; et
générer, par un circuit de duplication de file d'attente du gestionnaire de files d'attente matériel, une copie d'au moins une partie des premières données pour créer des premières données copiées ; le procédé comprenant en outre, par une interface de sortie du gestionnaire de files d'attente matériel, les étapes suivantes :
(a) fournir les premières données copiées à un fil de deuxième travailleur pour effectuer une surveillance de sécurité du réseau, le fil du deuxième travailleur étant couplé à une première file d'attente de sortie d'une pluralité de files d'attente de sortie couplées au gestionnaire de files d'attente matériel, où le fil du deuxième travailleur est un fil de débogage, et
(b) fournir au moins une partie des premières données à un fil de troisième travailleur par l'intermédiaire d'une deuxième file d'attente de sortie parmi la pluralité de files d'attente de sortie couplées au gestionnaire de files d'attente matériel, où le fil du troisième travailleur comprend l'inspection de paquets, la traduction d'adresse réseau, la détection d'intrusion, l'insertion d'annonces ou le routage.

9. Procédé selon la revendication 8, dans lequel le fil du premier travailleur s'exécute sur un premier cœur de traitement, le fil du deuxième travailleur s'exécute sur un deuxième cœur de traitement, et le fil du troisième travailleur s'exécute sur un troisième cœur de traitement, les premier, deuxième et troisième cœur de traitement comprenant des cœur de traitement séparés.

10. Procédé selon la revendication 8, dans lequel le fil du premier travailleur s'exécute sur une première machine virtuelle, le fil du deuxième travailleur s'exécute sur une deuxième machine virtuelle, et le fil du troisième travailleur s'exécute sur une troisième machine virtuelle, les première, deuxième et troisième machines virtuelles de traitement comprenant des machines virtuelles séparées.

11. Procédé selon l'une quelconque des revendications 8 à 10, dans lequel la génération de la copie d'au moins la partie des premières comprend de copier un pointeur vers les premières données.

12. Procédé selon l'une quelconque des revendications 8 à 11, dans lequel les opérations comprennent en outre de router les premières données et les premières données copiées vers des files d'attente de sortie respectives couplées entre les deuxième et troisième cœurs de traitement et un gestionnaire de files d'attente matériel.

13. Procédé selon la revendication 12, dans lequel les opérations comprennent en outre de recevoir des informations d'indication pour indiquer les données à copier à partir d'une pluralité de files d'attente d'entrée et de fournir les données à copier à un circuit de duplication de données.

14. Support lisible par ordinateur sur lequel sont stockées des instructions qui, lorsqu'elles sont exécutées sur une machine, amènent la machine à exécuter le procédé de l'une quelconque des revendications 8 à 13.
